# FASCICULE DE BREVET EUROPEEN

(11) **EP 3 953 190 B1**
(45) Date de publication et mention de la délivrance du brevet: **07.05.2025**
(21) Numéro de dépôt: 20712244.1
(22) Date de dépôt: 11.03.2020
(51) Int. Cl.: B60C 23/04

(54) **DISPOSITIF POUR SYSTÈME ÉLECTRONIQUE DE CONTRÔLE DE LA PRESSION DES PNEUS D'UN VÉHICULE AUTOMOBILE**
SYSTÈME DE SURVEILLANCE DE PRESSIONS DE PNEUMATIQUES D'UN VÉHICULE
SYSTEM FOR MONITORING PRESSURE OF VEHICLE TIRES

(30) Priorité: 09.04.2019 FR 1903789
(43) Date de publication de la demande: 16.02.2022
(73) Titulaire: ATEQ, 78340 Les Clayes-sous-Bois (FR)
(72) Inventeur: BOUT, Michel, 78340 Les Clayes-sous-Bois (FR); MOREAU, Vincent, 78340 Les Clayes-sous-Bois (FR)
(74) Mandataire: Vidon Brevets & Stratégie
(86) Numéro de dépôt international: PCT/EP2020/056429
(87) Numéro de publication internationale: WO 2020/207688

(56) Documents cités:
- EP-A1- 2 732 988
- WO-A1-2013/063061
- GB-A- 2 264 360
- GB-A- 2 500 697

## Description

La présente invention se rapporte au domaine des systèmes électroniques de contrôle de la pression des pneus (en anglais, « *Tire Pressure Monitoring System* » et dont le sigle usuel est « TPMS »).

La présente invention se rapporte plus particulièrement à un dispositif permettant de communiquer et reprogrammer un ou plusieurs éléments des systèmes électroniques de contrôle de la pression des pneus (dispositif parfois également appelé forceur de valves TPMS).

Généralement, un système électronique de contrôle de la pression des pneus comprend un ordinateur de bord logé dans le véhicule, ainsi qu'un ou plusieurs capteurs de pression disposés à l'intérieur des pneus, mesurant donc la pression interne du pneu, et configurés pour communiquer cette valeur de pression à l'ordinateur de bord du véhicule.

L'ordinateur de bord peut ainsi alerter l'utilisateur du véhicule si l'un des pneus venait à crever ou se dégonfler, entrainant un risque pour sa sécurité.

De tels systèmes électroniques de contrôle de la pression des pneus sont notamment décrits dans les documents WO2013063061 et EP2732988 de la demanderesse. Le document GB2500697 divulgue un autre type de système électronique de surveillance de véhicule apte notamment à communiquer avec un serveur à travers un réseau de communication.

Ordinairement, le capteur de pression logé dans la roue n'est pas amovible. Ainsi le changement d'une roue implique le changement du capteur, le nouveau capteur n'étant alors pas détecté automatiquement par l'ordinateur de bord du véhicule.

Il est donc nécessaire, lors du changement des pneus, d'appairer (ou associer) les capteurs logés dans les nouveaux pneus avec l'ordinateur de bord du véhicule. Cet appairage se fait au moyen du dispositif selon l'invention, ledit dispositif étant configuré pour activer les capteurs, récupérer et enregistrer les données pertinentes émises par le capteur (telles que l'identifiant du capteur) et les transmettre à l'ordinateur de bord, ceci afin que ce dernier détecte les capteurs logés dans les pneus nouvellement installés et puisse en capter les signaux et les communiquer à l'usager afin de l'avertir en cas d'une chute de pression dans un desdits pneus.

L'invention est ainsi un nouveau dispositif pour système électronique de contrôle de la pression des pneus d'un véhicule automobile, ledit dispositif comprenant :
- un moyen d'activation de capteurs de pneus,
- un moyen de réception de signaux en provenance des capteurs,
- une entité électronique configurée pour stocker et/ou traiter des informations véhiculées par les signaux émis par lesdits capteurs,
- un moyen de communication avec un ordinateur de bord de véhicule automobile pour transmettre les informations d'au moins un desdits capteurs.

Le dispositif coopère avec des capteurs de pression, mais ce dernier pourrait coopérer avec des capteurs d'autres types, tels que des capteurs de température, d'humidité..., logés dans un pneu et qu'il est nécessaire d'appairer avec l'ordinateur de bord du véhicule lors du changement d'un pneu.

Selon une autre caractéristique possible, ledit au moins un moyen d'activation de capteurs comprend une antenne. On notera que l'antenne peut être assimilée à un circuit résonnant LC (la puissance du signal émis par le circuit LC dépend notamment de la quantité d'énergie injectée, celle-ci étant notamment contrôlée par une tension d'alimentation variable et/ou par modulation de largeur d'impulsion de ladite tension).

Ladite antenne est configurée pour émettre un signal d'activation sur une fréquence adaptée auxdits capteurs, telle qu'une fréquence de 125 kHz.

Selon l'invention, ledit moyen d'activation comprend un système de conversion électrique, ledit système étant configuré pour convertir une première tension V_{B} en une deuxième tension V_{LF}.

La deuxième tension V_{LF} peut être utilisée directement ou indirectement pour générer un signal d'activation de capteurs. On notera qu'on entend par indirectement, le fait que la deuxième tension peut subir des transformations/modifications supplémentaires avant d'être utilisée pour générer ledit signal d'activation. Les caractéristiques du signal d'activation généré par ledit au moins un moyen d'activation sont corrélées aux caractéristiques de la tension utilisée pour générer ledit signal.

Ce dit système de conversion électrique est configuré pour délivrer deux valeurs distinctes V_{LF1} et V_{LF2} (ou différentes) de ladite deuxième tension V_{LF}.

Il a été constaté que la puissance du signal d'activation émis par le moyen d'activation des capteurs est sensiblement proportionnelle à la valeur au carré de la tension servant à générer ledit signal d'activation. Par ailleurs, les différents modèles de capteurs peuvent présenter une sensibilité variable aux signaux d'activation. Il est donc avantageux de pouvoir faire varier la puissance du signal d'activation afin de ne pas activer involontairement plusieurs capteurs à proximité et de fausser l'appairage entre le capteur souhaité et l'ordinateur de bord du véhicule. Et inversement, certains capteurs étant peu sensibles, il est alors avantageux d'avoir des signaux présentant une puissance suffisamment importante pour les activer. Ainsi, la première valeur de tension V_{LF1} correspond par exemple à la tension minimale d'activation d'au moins un type de capteurs et la deuxième valeur de tension V_{LF2} correspond à la tension permettant d'activer la plupart des capteurs existants (de plus l'adaptation de la tension permet d'adapter la qualité de signal et de s'adapter à la sensibilité du capteur).

Selon une autre caractéristique possible, le moyen d'activation comprend un circuit, tel qu'un module PWM (PWM pour «Pulse Width Modulation» en langue anglaise) permettant de faire varier l'amplitude du signal arrivant à l'antenne, ledit signal servant à générer le signal d'activation, par exemple sinusoïdal, des capteurs.

Selon l'invention, ledit système de conversion comprend un module qui est alimenté par la première tension V_{B} et qui est associé à au moins un interrupteur, ledit module délivrant une première valeur de tension V_{LF1} si l'interrupteur est ouvert et une deuxième valeur de tension V_{LF2} si l'interrupteur est fermé.

Ledit interrupteur est un un transistor à effet de champ.

Selon une autre caractéristique possible, l'interrupteur est contrôlé par l'entité électronique dudit dispositif.

Selon une autre caractéristique possible, ledit module comprend un circuit ou composant élévateur de tension, ainsi qu'un pont diviseur de tension.

Selon une autre caractéristique possible, ledit moyen de communication est un module OBD qui est logé dans ledit dispositif et qui est configuré pour être relié à l'ordinateur de bord.

Selon une autre caractéristique possible, le dispositif comprend un dispositif d'affichage, tel qu'un écran LCD ou TFT.

Ledit dispositif d'affichage permet par exemple d'afficher les données reçues par l'intermédiaire des signaux émis par des capteurs logés dans les différents pneus.

Selon une autre caractéristique possible, ledit moyen de communication comprend une prise OBD.

La prise OBD est configurée pour permettre le branchement d'un câble OBD et de se connecter ainsi de manière filaire à l'ordinateur de bord d'un véhicule.

On notera qu'on entend par OBD, l'ensemble des modules OBD répondant aux normes OBD, OBD-II, E-OBD, J-OBD, etc.

Selon une autre caractéristique possible, le dispositif comprend un boitier dans lequel sont logés le dispositif d'affichage et la prise OBD, la prise OBD et le dispositif d'affichage étant disposés à des extrémités opposées dudit boitier.

Il est en effet avantageux au niveau ergonomique de disposer le plus loin possible, l'un de l'autre, la prise OBD du dispositif d'affichage.

Ledit boitier, par exemple en matière plastique, comprend deux faces principales opposées reliées entre elles par quatre faces secondaires opposées deux à deux. De plus, ledit boitier présente une forme allongée et comporte ainsi deux extrémités longitudinales opposées. Le dispositif d'affichage est préférentiellement disposé sur l'une des faces principales à proximité d'une des extrémités longitudinales, tandis que la prise OBD est disposée sur l'une des faces secondaires à proximité ou sur l'autre extrémité longitudinale.

Selon une autre caractéristique possible, le dispositif comprend une batterie et un port de communication, ledit port de communication étant configuré pour être relié à une source d'alimentation électrique afin de recharger ladite batterie.

Ledit port de communication est par exemple un port de type USB. On notera par ailleurs que la source d'alimentation électrique peut être une prise secteur, mais également tout type d'appareil électronique ou électrique capable d'alimenter électriquement la batterie, tel qu'un ordinateur.

Il est avantageux de pouvoir recharger la batterie dudit dispositif par un port de communication, car cela évite d'installer une connectique spécifique pour cela et de surenchérir le cout de fabrication dudit dispositif.

Selon une autre caractéristique possible, l'entité électronique est configurée pour détecter le type de source d'alimentation électrique qui est connecté audit dispositif par l'intermédiaire du port de communication.

Selon une autre caractéristique possible, l'entité électronique détecte le type de source électrique par l'intermédiaire d'un message envoyé par un appareil électronique et/ou par l'absence de message.

En effet, ladite entité électronique détecte le type de source d'alimentation électrique par la réception d'un message (ou signal) par ledit port de communication (message généralement codé par des variations de la tension et/ou de l'intensité délivrée(s) par ladite source d'alimentation électrique) ou par l'absence de message. L'absence de message indique au dispositif selon l'invention que la source d'alimentation est par exemple une prise secteur, tandis que la réception d'un message indique par exemple que la source d'alimentation est un appareil électronique, tel qu'un ordinateur.

En fonction du type de source d'alimentation électrique, le dispositif est configuré pour faire varier les intensités du courant destiné à charger la batterie dudit dispositif.

Selon une autre caractéristique possible, le dispositif selon l'invention comprend un vibreur servant à alerter l'utilisateur dudit dispositif lorsque cela est nécessaire.

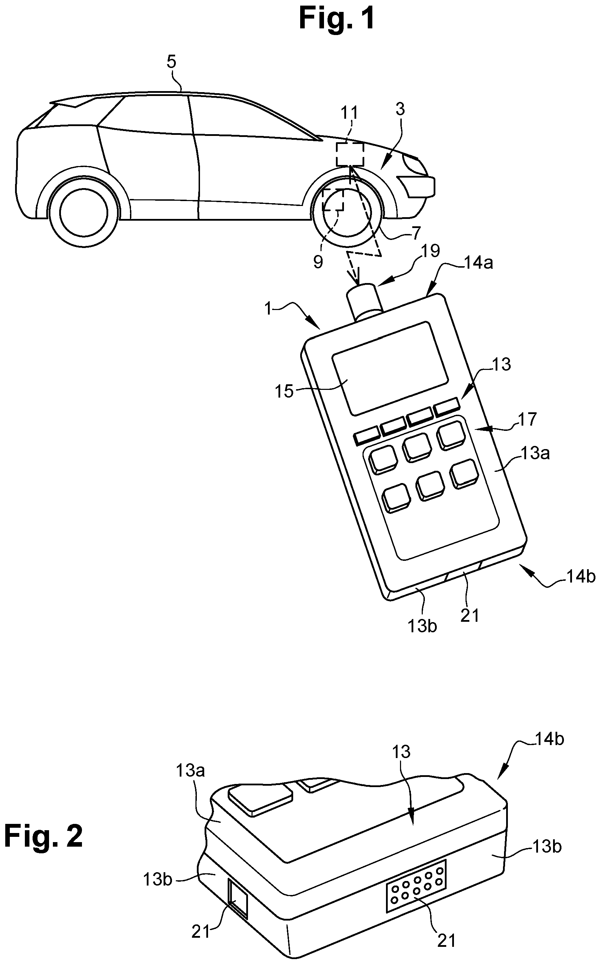

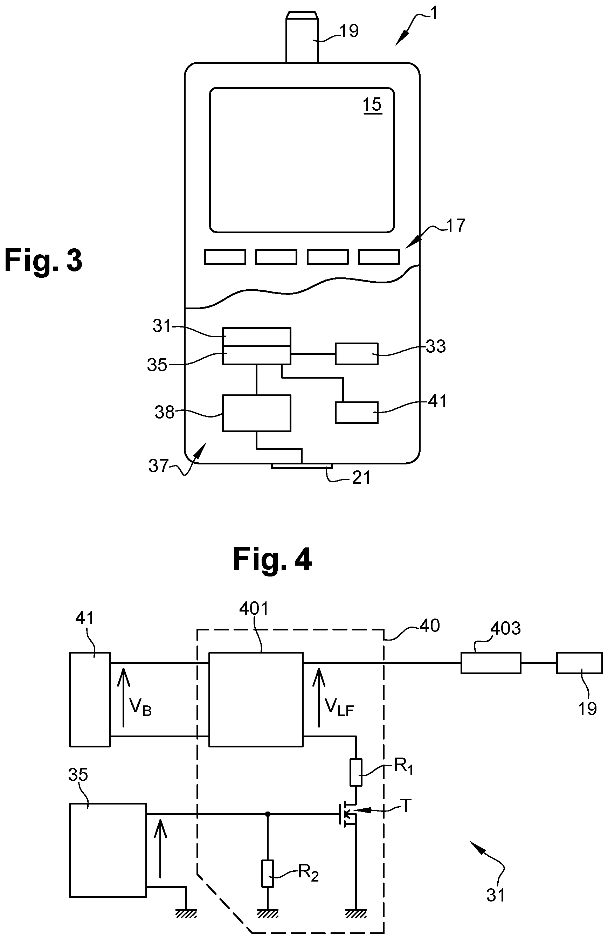

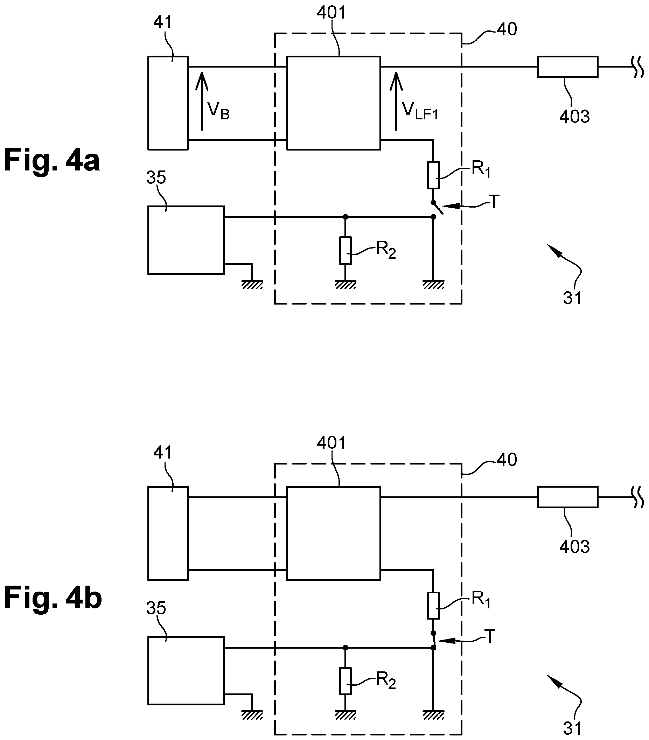

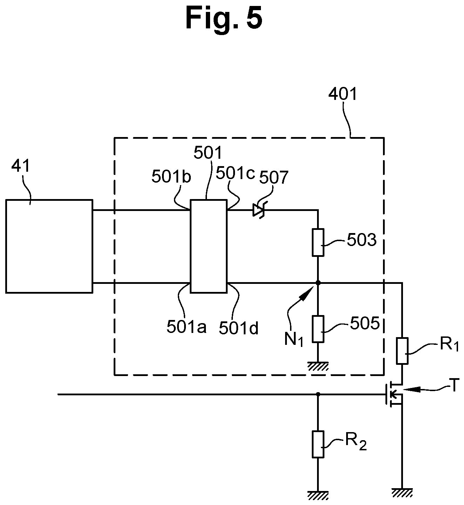

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
- **La** **figure 1** est une représentation très schématique en perspective d'un dispositif selon l'invention coopérant avec un système électronique de contrôle de la pression des pneus d'un véhicule automobile ;
- **La** **figure 2** est une vue agrandie d'une partie du dispositif de la figure 1 ;
- **La** **figure 3** est une vue de face et de détail du dispositif de la figure 1 ;
- **La** **figure 4** est une représentation schématique d'une partie du circuit électronique du dispositif de la figure 3 ;
- **La** **figure 4a** est une représentation schématique d'une partie du circuit électronique du dispositif de la figure 3 ;
- **La** **figure 4b** est une représentation schématique d'une partie du circuit électronique du dispositif de la figure 3 ;
- **La** **figure 5** est une représentation schématique d'une sous-partie du circuit électronique de la figure 4.

La figure 1 représente une vue très schématique d'un dispositif 1 pour système électronique de contrôle de la pression 3 des pneus d'un véhicule automobile 5 (ledit dispositif 1 pouvant également être désigné sous les termes « activateur de valves » ou encore « forceur de valves »). Le véhicule automobile 5, d'une part, est équipé de pneus 7 dans lesquels sont logés des capteurs 9, tel que des capteurs de pression, et d'autre part, comprend un ordinateur de bord 11 (également appelé unité de commande électronique et désignée généralement sous le sigle ECU).

Le dispositif 1 comprend un boitier 13, par exemple en matière plastique, un dispositif d'affichage 15, un clavier 17 et une antenne 19 pour l'émission d'un signal d'activation de capteurs, ainsi qu'une prise OBD 21. Ladite prise OBD 21 est configurée pour permettre par exemple le raccordement du dispositif 1 à l'ordinateur de bord 11 d'un véhicule, notamment par l'intermédiaire d'un câble OBD.

Plus particulièrement, le boiter 13 comprend deux faces principales 13a opposées qui sont reliées entre elles par quatre faces secondaires 13b opposées deux à deux. De plus, ledit boitier 13 présente une forme allongée et comporte ainsi deux extrémités longitudinales opposées 14a et 14b.

Le dispositif d'affichage 15 est disposé sur l'une des faces principales 13a à proximité d'une des extrémités longitudinales 14a, de préférence également à proximité de l'antenne 19, tandis que la prise OBD 21 est disposée sur l'une des faces secondaires à proximité de l'autre extrémité longitudinale 14b du boitier 13.

Le dispositif 1 comprend également un port de communication 18, par exemple disposé sur une des faces secondaires 13b (plus particulièrement visible sur la figure 2), de préférence à proximité de l'extrémité longitudinale 14b opposée à l'antenne 19. Ledit port de communication 18 est par exemple un port de type USB.

La figure 3 est une représentation très schématique et de détail du dispositif 1 de la figure 1.

Ledit dispositif 1 comprend ainsi :
- au moins un moyen d'activation 31 de capteur de pneus, tels que des moyens permettant de générer des signaux (continus et/ou modulés) d'activation de capteurs, ledit moyen d'activation 31 comprenant l'antenne 19 qui permet notamment de propager au mieux lesdits signaux générés jusqu'aux capteurs 9 ;
- un moyen de réception 33 de signaux en provenance des capteurs, généralement une autre antenne logée dans le boitier 13 et configurée par exemple pour recevoir des signaux d'une fréquence de 433,92 MHz ou de 315 MHz (le capteur émettant un signal après avoir été activé par ledit moyen d'activation 31) ;
- une entité électronique 35 configurée pour stocker et/ou traiter des informations véhiculées par les signaux émis par lesdits capteurs 9 (et reçus par l'intermédiaire du moyen de réception 33) ;
- un moyen de communication 37 avec un ordinateur de bord 11 de véhicule automobile pour transmettre les informations d'au moins un desdits capteurs 9, informations reçues par l'intermédiaire de signaux provenant desdits capteurs 9.

Le moyen de communication 37 est par exemple un module OBD qui comprend un circuit de gestion 38 de la communication OBD et la prise OBD 21 précédemment mentionnée. On notera que le circuit de gestion 38 peut également être intégré dans l'entité électronique 35.

On notera que lesdits signaux d'activation sont des signaux électromagnétiques, continus ou modulés, émis par les moyens d'activation 31, qui présentent par exemple une fréquence de 125 kHz.

Le dispositif 1 comporte également une batterie 41 (de préférence une unique batterie). Ladite batterie 41 étant configurée pour délivrer une valeur de tension continue V_{B}, valeur sensiblement fixe et présentant par exemple une valeur maximale de 4,2 V. Ainsi, ledit moyen d'activation 31 comprend un système de conversion électrique 40 configuré pour transformer la tension V_{B} reçue par la batterie 41 et la délivrer à l'antenne 19.

Plus particulièrement, la figure 4 est une vue schématique détaillée dudit système de conversion électrique 40.

Ledit système 40 comprend ainsi un module 401 dont l'entrée est reliée à la batterie 41, la batterie 41 alimentant le module 401 avec la tension V_{B}, et dont la sortie est reliée à un circuit 403, tel qu'un module PWM, permettant de modifier l'amplitude du signal servant de générer le signal d'activation, et à un interrupteur T, l'interrupteur T étant relié audit module 401 par l'intermédiaire d'une résistance R₁. Le module 401, quant à lui, est configuré pour fournir, en sortie, une tension continue notée V_{LF}.

Ainsi, ledit système de conversion 40 comprend un circuit convertissant une première tension V_{B} en une deuxième tension V_{LF}.

Le module PWM 403 reçoit donc en entrée une tension continue V_{LF} et fournit, en sortie, à l'antenne 19 un signal électrique dont la tension varie en fonction du rapport cyclique choisi.

Par ailleurs, l'interrupteur T est par exemple relié et commandé par l'entité électronique 35.

Ainsi, dans le mode de réalisation représenté aux figures 4 et suivantes, l'interrupteur T est un transistor (par exemple un MOSFET) dont la grille est reliée à l'entité électronique 35 et qui est commandé par la tension délivrée audit transistor T par l'entité électronique 35. Par ailleurs, une résistance R₂ peut être disposée entre l'entité 35 et l'interrupteur T lorsque celui-ci est un transistor, afin de polariser celui-ci de manière adéquate lors du démarrage dudit dispositif 1.

Ainsi, en fonction de la position, ouverte et fermée, de l'interrupteur T, la valeur de la tension V_{LF} en sortie du module 401 peut prendre deux valeurs différentes.

Les positions de l'interrupteur T et leurs conséquences sont plus particulièrement illustrées aux figures 4a et 4b.

Ainsi, si l'interrupteur T est ouvert, comme illustré à la figure 4a, la résistance R₁ est en court-circuit et n'influence pas la tension sortie V_{LF} du module 401, la tension en sortie du module 401 prend alors une première valeur notée V_{LF1}, par exemple une valeur de 7,2 V.

Ainsi, si l'interrupteur T est fermé, comme illustré à la figure 4b, la résistance R₁ influence la tension sortie V_{LF} du module 401, la tension en sortie du module 401 prend une deuxième valeur notée V_{LF2}. On notera que la première valeur notée V_{LF1} est inférieure à la deuxième valeur notée V_{LF2}, ladite deuxième valeur V_{LF2} présente par exemple une valeur de 9,5 V.

Le module PWM 403 peut donc être alimenté par deux valeurs de tension continue différentes V_{LF1} et V_{LF2} permettant ainsi de générer un signal d'activation de capteur (émis par l'antenne 19) et pouvant présenter des puissances variables, tout en s'affranchissant du fait d'avoir plusieurs sources de tension (continue ou non).

Pour rappel, la puissance du signal d'activation émis par les moyens d'activation 31, par l'intermédiaire de l'antenne 19, est corrélée à la valeur de la tension arrivant à l'antenne 19 et servant à générer un signal d'activation.

La figure 5 est une vue schématique et plus détaillée du module 401. Ledit module 401 comprend ainsi un circuit ou composant 501 alimenté par la première tension V_{B} (provenant de la batterie 41) et associé à un pont diviseur de tension composé d'au moins une première et une deuxième résistance, respectivement 503 et 505.

Le circuit ou composant 501 est relié, d'une part, en entrée à la batterie 41 et, d'autre part, en sortie à la première résistance 503 du pont diviseur, ladite première résistance 503 étant disposée en parallèle des bornes de sortie du circuit ou composant 501. Ledit circuit ou composant 501 comporte en outre deux entrées 501a et 501b et deux sorties 501c et 501d (respectivement première et deuxième sortie).

La deuxième résistance 505 est ainsi reliée à la masse et à un nœud N₁ reliant la première sortie 501c du circuit ou composant 501 par l'intermédiaire de la première résistance 503, la deuxième sortie 501d du composant ou circuit 501, et la résistance R₁ précédemment détaillée (résistance du système de conversion 40). La résistance R₁ et la deuxième résistance 505 sont disposées en parallèle l'une de l'autre.

Concernant le circuit ou composant 501, celui-ci est configuré pour élever la tension V_{B} reçue provenant de la batterie 41 et peut par exemple comprendre une sortie 501c (notamment lorsque ce dernier est un composant dédié) qui permet au composant 501 de réguler la tension V_{LF} délivrée en sortie.

Le module 401 peut également comprendre une diode 507, par exemple Schottky, disposée entre la première sortie 501c et la première résistance R₁, qui joue le rôle d'une diode de roue libre.

Par ailleurs, le port de communication 18 est configuré pour recevoir une énergie électrique destinée à charger ladite batterie 41. Ledit port de communication 18 est donc destiné (en plus du fait d'être configuré pour communiquer avec un appareil électronique, tel qu'un ordinateur) à être relié à une source d'alimentation électrique pour recharger ladite batterie 41.

Ladite source d'alimentation électrique peut être une prise secteur, mais également tout type d'appareil électronique ou électrique capable d'alimenter électriquement la batterie 41, tel qu'un ordinateur.

L'entité électronique 35 du dispositif 1 est, de plus, configurée pour détecter le type de source d'alimentation électrique connecté audit dispositif 1 par l'intermédiaire du port de communication 18.

L'entité électronique 35 est configurée pour recevoir, par l'intermédiaire dudit port de communication 18, un message ou signal en provenance d'un appareil électronique connecté audit dispositif 1. Ainsi, lorsque l'entité électronique 35 reçoit un message, l'entité 35 limite alors l'intensité du courant destiné à charger la batterie 41 à une première valeur I₁, ladite première valeur I₁ étant, par exemple, au maximum égale à 500 mA.

Dans l'éventualité, où l'entité électronique 35 ne reçoit pas de signal ou de message, l'entité 35 règle l'intensité du courant destiné à charger la batterie 41 à une deuxième valeur I₂, ladite deuxième valeur I₂ étant supérieure à la première valeur I₁. Ladite deuxième valeur I₂ est par exemple comprise entre 1 et 2 A.

Préférentiellement, l'entité électronique 35 est configurée pour que la charge de la batterie 41 s'effectue d'abord avec la première valeur d'intensité I₁, si aucun message n'est reçu par l'entité 35 pendant un temps t, par exemple 30 secondes, alors l'intensité du courant de charge de la batterie 41 prend la deuxième valeur d'intensité I₂.

La réception d'un signal ou non en provenance de la source d'alimentation électrique permet donc de détecter le type de source électrique connecté audit dispositif 1 et d'adapter l'intensité du courant chargeant la batterie 41 en conséquence, afin d'éviter d'endommager la source d'alimentation électrique.

## Revendications

1. Dispositif (1) pour système électronique de contrôle de la pression des pneus d'un véhicule automobile, ledit dispositif (1) comprenant
- un moyen d'activation (31) de capteurs de pneus,
- un moyen de réception (33) de signaux en provenance des capteurs,
- une entité électronique (35) configurée pour stocker et/ou traiter des informations véhiculées par les signaux émis par lesdits capteurs,
- un moyen de communication (37) avec un ordinateur de bord de véhicule automobile pour transmettre les informations d'au moins un desdits capteurs,
ledit moyen d'activation (31) comprenant un système de conversion électrique (40), ledit système (40) étant configuré pour convertir une première tension V_{B} en une deuxième tension V_{LF}, ledit système de conversion électrique (40) étant configuré pour délivrer deux valeurs distinctes V_{LF1} et V_{LF2} de ladite deuxième tension VLF., **caractérisé en ce que** ledit système de conversion (40) comprend un module (401) qui est alimenté par la première tension V_{B} et qui est associé à au moins un transistor à effet de champ comme interrupteur (T) , ledit module (401) délivrant une première valeur de tension V_{LF1} si l'interrupteur (T) est ouvert et une valeur de tension V_{LF2} si l'interrupteur (T) est fermé, et **en ce que** ledit module (401) comprend un circuit ou composant (501) élévateur de tension, ainsi qu'un pont diviseur de tension.

2. Dispositif selon la revendication précédente, **caractérisé en ce que** ledit moyen de communication (37) est un module OBD qui est logé dans ledit dispositif (1) et qui est configuré pour être relié à l'ordinateur de bord.

3. Dispositif selon l'une quelconque des revendications précédentes, **caractérisé en ce que** ledit moyen de communication (37) comprend une prise OBD (21).

4. Dispositif selon l'une quelconque des revendications précédentes, **caractérisé en ce qu'**il comprend un dispositif d'affichage (15), tel qu'un écran LCD ou TFT.

5. Dispositif selon les revendications 3 et 4, caractérisé en ce le dispositif comprend un boitier (13) dans lequel sont logés le dispositif d'affichage (15) et la prise OBD (21), la prise OBD (21) et le dispositif d'affichage (15) étant disposés à des extrémités (14a, 14b) opposées dudit boitier (13).

6. Dispositif selon l'une quelconque des revendications précédentes, **caractérisé en ce que** le dispositif (1) comprend une batterie (41) et un port de communication (18), ledit port de communication (18) étant configuré pour être relié à une source d'alimentation électrique afin de recharger ladite batterie (41).

7. Dispositif selon la revendication précédente, **caractérisé en ce que** l'entité électronique (35) est configurée pour détecter le type de source d'alimentation électrique qui est connecté audit dispositif (1) par l'intermédiaire du port de communication (21).

8. Dispositif selon la revendication précédente, **caractérisé en ce que** l'entité électronique (35) détecte le type de source électrique par l'intermédiaire d'un message envoyé par un appareil électronique et/ou par l'absence de message.

9. Dispositif selon l'une quelconque des revendications précédentes, **caractérisé en ce qu'**il comprend un circuit permettant de faire varier l'amplitude du signal arrivant à l'antenne et qui sert à générer le signal d'activation des capteurs.

## Patentansprüche

1. Vorrichtung (1) für ein elektronisches System zur Kontrolle des Reifendrucks in einem Kraftfahrzeug, wobei die Vorrichtung (1) Folgendes umfasst
- ein Mittel (31) zur Aktivierung von Reifensensoren,
- ein Mittel (33) zum Empfangen von Signalen von den Sensoren,
- eine elektronische Einheit (35), die dazu eingerichtet ist, um Informationen zu speichern und/oder zu verarbeiten, die durch die von den Sensoren abgegebenen Signale übermittelt werden,
- ein Mittel (37) zur Kommunikation mit einem Bordcomputer des Kraftfahrzeugs, um Informationen von mindestens einem der Sensoren zu übertragen,
wobei das Aktivierungsmittel (31) ein elektrisches Wandlungssystem (40) umfasst, wobei das System (40) dazu eingerichtet ist, um eine erste Spannung V_{B} in eine zweite Spannung V_{LF} umzuwandeln, wobei das elektrische Wandlungssystem (40) dazu eingerichtet ist, um zwei unterschiedliche Werte V_{LF1} und V_{LF2} der zweiten Spannung V_{LF} abzugeben, **dadurch gekennzeichnet, dass** das Wandlungssystem (40) ein Modul (401) umfasst, das mit der ersten Spannung V_{B} versorgt wird und das mit wenigstens einem Feldeffekttransistor als Schalter (T) verbunden ist, wobei das Modul (401) einen ersten Spannungswert V_{LF1} abgibt, wenn der Schalter (T) geöffnet ist, und einen Spannungswert V_{LF2}, wenn der Schalter (T) geschlossen ist, und dass das Modul (401) eine Spannungserhöhungsschaltung oder -komponente (501) sowie eine Spannungsteilerbrücke umfasst.

2. Vorrichtung nach dem vorhergehenden Anspruch, **dadurch gekennzeichnet, dass** das Kommunikationsmittel (37) ein OBD-Modul ist, das in der Vorrichtung (1) untergebracht und so konfiguriert ist, um mit dem Bordcomputer verbunden zu sein.

3. Vorrichtung nach einem der vorhergehenden Ansprüche, **dadurch gekennzeichnet, dass** das Kommunikationsmittel (37) eine OBD-Buchse (21) umfasst.

4. Vorrichtung nach einem der vorhergehenden Ansprüche, **dadurch gekennzeichnet, dass** sie eine Anzeigevorrichtung (15), wie z. B. einen LCD- oder TFT-Bildschirm, umfasst.

5. Vorrichtung nach den Ansprüchen 3 und 4, **dadurch gekennzeichnet, dass** die Vorrichtung ein Gehäuse (13) umfasst, in welchem die Anzeigevorrichtung (15) und die OBD-Buchse (21) untergebracht sind, wobei die OBD-Buchse (21) und die Anzeigevorrichtung (15) an gegenüberliegenden Enden (14a, 14b) des Gehäuses (13) angeordnet sind.

6. Vorrichtung nach einem der vorhergehenden Ansprüche, **dadurch gekennzeichnet, dass** die Vorrichtung (1) eine Batterie (41) und einen Kommunikationsanschluss (18) umfasst, wobei der Kommunikationsanschluss (18) so konfiguriert ist, dass er mit einer elektrischen Stromquelle verbindbar ist, um die Batterie (41) aufzuladen.

7. Vorrichtung nach dem vorhergehenden Anspruch, **dadurch gekennzeichnet, dass** die elektronische Einheit (35) so konfiguriert ist, um den Typ der elektrischen Stromquelle zu erkennen, die über den Kommunikationsanschluss (21) an die Vorrichtung (1) angeschlossen ist.

8. Vorrichtung nach dem vorhergehenden Anspruch, **dadurch gekennzeichnet, dass** die elektronische Einheit (35) den Typ der elektrischen Stromquelle anhand einer von einem elektronischen Gerät gesendeten Nachricht und/oder anhand des Fehlens einer Nachricht erkennt.

9. Vorrichtung nach einem der vorhergehenden Ansprüche, **dadurch gekennzeichnet, dass** sie eine Schaltung umfasst, die die Amplitude des an der Antenne ankommenden Signals variieren kann und die dazu dient, das Aktivierungssignal der Sensoren zu erzeugen.

## Claims

1. Device (1) for electronic system for monitoring pressure of a motor vehicle tyres, said device (1) comprising
- activation means (31) of tyre sensors,
- receiving means (33) of signals from the sensors,
- an electronic entity (35) configured to store and/or process information conveyed by the signals transmitted by said sensors,
- communication means (37) with a motor vehicle on-board computer for transmitting the information from at least one of said sensors,
said activation means (31) comprising an electrical conversion system (40), said system (40) being configured to convert a first voltage V_{B} into a second voltage V_{LF}, said electrical conversion system (40) being configured to deliver two distinct values V_{LF1} and V_{LF2} of said second voltage V_{LF}, **characterised in that** said conversion system (40) comprises a module (401) that is powered by the first voltage V_{B} and that is associated with at least one field effect transistor as a switch (T), said module (401) delivering a first voltage value V_{LF1} if the switch (T) is open and a voltage value V_{LF2} if the switch (T) is closed, and **in that** said module (401) comprises a voltage step-up circuit or component (501) and a voltage divider bridge.

2. Device according to the preceding claim, **characterised in that** said communication means (37) is an OBD module that is housed in said device (1) and that is configured to be connected to the on-board computer.

3. Device according to any one of the preceding claims, **characterised in that** said communication means (37) comprises an OBD socket (21).

4. Device according to any one of the preceding claims, **characterised in that** it comprises a display device (15), such as an LCD or TFT screen.

5. Device according to claims 3 and 4, **characterised in that** the device comprises a casing (13) in which the display device (15) and the OBD socket (21) are housed, the OBD socket (21) and the display device (15) being arranged at opposite ends (14a, 14b) of said casing (13).

6. Device according to any one of the preceding claims, **characterised in that** the device (1) comprises a battery (41) and a communication port (18), said communication port (18) being configured to be connected to a power supply source in order to charge said battery (41).

7. Device according to the preceding claim, **characterised in that** the electronic entity (35) is configured to detect the type of electrical power supply source that is connected to said device (1) via the communication port (21).

8. Device according to the preceding claim, **characterised in that** the electronic entity (35) detects the type of electrical source via a message sent by an electronic device and/or by the absence of a message.

9. Device according to any one of the preceding claims, **characterised in that** it comprises a circuit for varying the amplitude of the signal arriving at the antenna and that is used to generate the sensor activation signal.
